# EUROPÄISCHE PATENTSCHRIFT

(11) **EP 1 445 366 B1**
(45) Veröffentlichungstag und Bekanntmachung des Hinweises auf die Patenterteilung: **27.06.2007**
(21) Anmeldenummer: 03007612.9
(22) Anmeldetag: 02.04.2003
(51) Int. Cl.: D04H 3/08, D04H 3/10, D04H 3/12, B32B 5/26, D04H 13/00

(54) **Verfahren zur Herstellung eines Faserlaminates**
Process for making a spunbond nonwoven fabric from filaments
Procédé de fabrication d'un textile nontissés filé lié à partir de filaments

(30) Priorität: 10.02.2003 EP 03002932
(43) Veröffentlichungstag der Anmeldung: 11.08.2004
(73) Patentinhaber: Reifenhäuser GmbH & Co. KG Maschinenfabrik, 53839 Troisdorf (DE)
(72) Erfinder: Sommer, Sebastian, 53844 Troisdorf (DE); Güdden, Jens, 53842 Troisdorf-Spich (DE)
(74) Vertreter: Rohmann, Michael

(56) Entgegenhaltungen:
- EP-A- 0 473 325
- EP-A- 0 577 156
- EP-A- 1 424 424
- WO-A-00/18996
- WO-A-96/34136
- US-A- 5 144 729
- US-A- 5 284 703

## Beschreibung

Verfahren zur Herstellung eines Faserlaminates, insbesondere eines saugfähigen Wischtuches, aus zumindest einem Spinnvlies aus Filamenten und zumindest einer Faserschicht aus hydrophilen Fasern. - Der Begriff Faserlaminat meint also im Rahmen der Erfindung ein Mehrschichtprodukt bzw. ein Laminat aus zumindest einer Faserschicht aus hydrophilen Fasern und zumindest einer Schicht aus Filamenten. - Mit dem Begriff Filamente sind Endlosfasern gemeint, d. h. theoretisch unendlich lange Fäden, aus denen das Spinnvlies gebildet wird. Davon zu unterscheiden sind die Fasern, bei denen es sich um relativ kurze Fäden handelt bzw. die jedenfalls im Durchschnitt kürzer sind als die vorgenannten Filamente. - Filamente meint im Rahmen der Erfindung insbesondere Filamente aus einem thermoplastischen Kunststoff.

Es sind bereits Faserlaminate bzw. Wischtücher der eingangs genannten Art bekannt. Allerdings haben sich diese Produkte insbesondere im Vergleich zu Faserlaminaten, die statt Filamenten lediglich Kurzfasern enthalten, nicht bewährt. Die bekannten Faserlaminate mit Spinnvliesen aus Filamenten zeichnen sich vor allem durch ein nachteilhaftes Oberflächenverhalten bei abrasiver Beanspruchung aus. Das wird darauf zurückgeführt, dass die Endlosfilamente aufgrund der beidseitigen Einspannung im Vlies weniger beweglich sind und deshalb nur schwierig mit benachbarten Filamenten der Faserschicht verschlauft werden können. Bei abrasiver Beanspruchung dieser bekannten Faserlaminate lösen sich deshalb die Fasern leichter aus der Oberfläche. Für die Anwendung eines solchen Faserlaminates als Wischtuch ist das nicht akzeptabel.

Aus WO 00/18996 A ist ein Verfahren zur Herstellung eines Faserlaminates bekannt, das als Wischtuch einsetzbar ist. Ein Spinnvlies aus Filamenten wird hier mit einem Kalander vorverfestigt. Auf dieses vorverfestigte Spinnvlies wird eine Faserschicht aus hydrophilen Fasern, nämlich aus Zellulosefasern aufgebracht. Das Laminat aus Spinnvlies und Faserschicht wird hydrodynamisch verfestigt. Ähnliche Verfahren sind auch aus US-A-5 284 703, US-A-5 144 729 und WO 96/34136 A bekannt. Die mit diesen Verfahren hergestellten Wischtücher lassen ebenfalls zu wünschen übrig.

Demgegenüber liegt der Erfindung das technische Problem zugrunde, ein Verfahren zur Herstellung eines Faserlaminates der eingangs genannten Art anzugeben, mit dem Faserlaminate hergestellt werden, die die vorstehend geschilderten Nachteile nicht aufweisen.

Zur Lösung dieses technischen Problems lehrt die Erfindung ein Verfahren zur Herstellung eines Faserlaminates, insbesondere eines saugfähigen Wischtuches,
wobei zumindest ein Spinnvlies aus Filamenten mit der Maßgabe vorverfestigt wird, dass das vorverfestigte Spinnvlies eine Höchstzugkraft-Arbeit aufweist, die zumindest 50 % der Höchstzugkraft-Arbeit des Spinnvlieses bei maximaler Verfestigung des Spinnvlieses beträgt,
wobei auf das vorverfestigte Spinnvlies zumindest eine Faserschicht aus hydrophilen Fasern aufgebracht wird,
wobei das Laminat aus Spinnvlies und Faserschicht hydrodynamisch verfestigt wird
und wobei das vorverfestigte Spinnvlies mit zumindest einem Netzmittel behandelt wird. - Die vorgenannte Höchstzugkraft-Arbeit ergibt sich aus bzw. wird definiert in DIN 53816.

Es liegt im Rahmen der Erfindung, dass das Spinnvlies mit einem Kalander, insbesondere mit einem Heißprägekalander vorverfestigt wird. Die vorstehend genannte Höchstzugkraft-Arbeit des Spinnvlieses bei maximaler Verfestigung des Spinnvlieses ergibt sich wie folgt. Der Anpressdruck und/oder die Oberflächentemperatur des Kalanders bzw. der Kalanderwalzen wird zunächst so variiert, dass sich die maximale bzw. höchstmögliche Höchstzugkraft-Arbeit für das auf diese Weise vorverfestigte Spinnvlies ergibt. Dabei handelt es sich dann um die für das vorgegebene Spinnvlies größtmögliche Höchstzugkraft-Arbeit dieses Spinnvlieses bei maximaler Verfestigung. Um dann einen erfindungsgemäßen Wert von zumindest 50 % der maximalen Höchstzugkraft-Arbeit einzustellen, wird dann zweckmäßigerweise bei ansonsten gleichen Bedingungen (wie bei der Festlegung der maximalen Höchstzugkraft-Arbeit) der Anpressdruck und/oder die Oberflächentemperatur des Kalanders bzw. der Kalanderwalzen verändert, bis der erfindungsgemäße Höchstzugkraft-Arbeitswert erreicht wird. Erfindungsgemäß soll die Anordnung der bei der Vorverfestigung erzeugten Verbindungspunkte bzw. Bondingpunkte im Spinnvlies so erfolgen, dass ein optimaler Kompromiss zwischen geschlossener Oberfläche des Vlieses (enger Abstand der Bondingpunkte) und guter Vernadelungsfähigkeit (größerer Abstand der Bondingpunkte) erzielt wird.

Bei dem erfindungsgemäßen Verfahren wird zweckmäßigerweise mit üblichen Prägekalandern bzw. Heißprägekalandern gearbeitet. Als Kalandermuster kommen dabei regelmäßige und/oder regellose Punktmuster sowie offene und/oder geschlossene Linienmuster in Frage. Beim Kalandrieren kann eine Gravurwalze gegen eine glatte Walze oder auch eine Gravurwalze gegen eine Gravurwalze arbeiten. Bei der Ausführungsform "Gravurwalze gegen Gravurwalze" kann sowohl eine Gravurerhöhung der einen Walze gegen eine Gravurerhöhung der anderen Walze arbeiten als auch eine Gravurerhöhung der einen Walze gegen ein Gravurtal der anderen Walze arbeiten. Es liegt im Rahmen der Erfindung, dass die Vliesbahn bereits bei der Vorverfestigung dreidimensional deformiert wird, um ein höheres Volumen im Endprodukt zu erzielen.

Für die Herstellung des Spinnvlieses werden im Rahmen der Erfindung vorzugsweise Filamente mit einer Feinheit bzw. mit einem Durchmesser von 0,3 bis 3 Denier, bevorzugt 0,5 bis 2,5 Denier und sehr bevorzugt 0,8 bis 1,5 Denier eingesetzt. Zweckmäßigerweise liegt die Feinheit bzw. der Durchmesser der Filamente des Spinnvlieses unter 1,5 Denier. - Nach einer Ausführungsform der Erfindung bestehen die Filamente des Spinnvlieses zumindest teilweise aus Bikomponentenfilamenten. Dabei haben sich insbesondere Bikomponentenfilamente mit einer Kern-Mantel-Anordnung bewährt. - Es liegt im Rahmen der Erfindung, dass das Spinnvlies aus einer Mehrzahl von Vlieslagen bzw. Filamentlagen besteht. Die Filamente der einzelnen Lagen können dabei unterschiedliche Eigenschaften aufweisen.

Wie oben bereits dargelegt werden bei der Vorverfestigung des Spinnvlieses Verbindungspunkte bzw. Bondingpunkte zwischen den Filamenten des Spinnvlieses erzeugt. Zweckmäßigerweise wird die Vorverfestigung des Spinnvlieses mit der Maßgabe durchgeführt, dass die maximale mittlere freie Weglänge zwischen zwei Bondingpunkten des Spinnvlieses kleiner als 15 mm ist.

Gemäß einer bevorzugten Ausführungsform der Erfindung wird das vorverfestigte Spinnvlies deformiert und zwar zweckmäßigerweise vor dem Aufbringen der Faserschicht aus hydrophilen Fasern. Dabei liegt es im Rahmen der Erfindung, dass die Deformation quer zur Vliesfläche bzw. Vliesoberfläche erfolgt, beispielsweise senkrecht zur Vliesoberfläche, im Wesentlichen senkrecht zur Vliesoberfläche oder schräg zur Vliesoberfläche. Die Deformation wird mit der Maßgabe durchgeführt, dass die Dicke des vorverfestigten Spinnvlieses aufgrund der Deformation erhöht wird. Die erfindungsgemäße Deformation des vorverfestigten Spinnvlieses erfolgt insbesondere dann, wenn die Dicke bzw. das Volumen des hergestellten Faserlaminates noch zu wünschen übrig lässt bzw. erhöht werden soll. Die Deformation kann beispielsweise mit Hilfe hydraulischer Kräfte auf der Trommel eines Heißlufttrommeltrockners oder einer Saugwalze durchgeführt werden. Es liegt auch im Rahmen der Erfindung, dass die Deformation des vorverfestigten Spinnvlieses zwischen zwei wechselwirkenden bzw. ineinander eintauchenden Oberflächen stattfindet, indem beispielsweise eine Gummi- oder Bürstenwalze gegen eine Metallwalze mit genarbter Oberfläche arbeitet oder durch Plissieren o.dgl. Eine Deformation des vorverfestigten Spinnvlieses kann auch durch Verstrecken des Spinnvlieses über genutete oder anderweitig unregelmäßig eingerichtete Oberflächen erfolgen. Es liegt im Rahmen der Erfindung, dass die deformierenden Verfahrensschritte bei einer Temperatur unterhalb der Schmelztemperatur der Filamente und bei Bikomponenten- bzw. Mehrkomponentenfasern unterhalb des Schmelzpunktes der niedriger schmelzenden Komponente durchgeführt wird. Vorzugsweise erfolgt die Deformation im Temperaturbereich zwischen dem Erweichungspunkt und dem Schmelzpunkt der Filamente.

Nach einer sehr bevorzugten Ausführungsform, der im Rahmen der Erfindung ganz besondere Bedeutung zukommt, wird das vorverfestigte Spinnvlies vor der hydrodynamischen Verfestigung mit zumindest einem Netzmittel behandelt. Es liegt dabei im Rahmen der Erfindung, dass zumindest ein Tensid als Netzmittel eingesetzt wird. Ein solches erfindungsgemäß verwendetes Tensid weist einen lipophilen und einen hydrophilen Anteil bzw. ein lipophiles und ein hydrophiles Ende auf. Tenside haben sich im Rahmen des erfindungsgemäßen Verfahrens zur Behandlung des vorverfestigten Spinnvlieses besonders bewährt. Als Netzmittel können ionische, d. h. kationische und/oder anionische Tenside eingesetzt werden oder auch nicht-ionische Tenside. Nach einer Ausführungsform der Erfindung werden Ampho-Tenside als Netzmittel verwendet. - Es liegt im Rahmen der Erfindung, dass nach der Behandlung mit dem Netzmittel zunächst eine Trocknung des vorverfestigten Spinnvlieses erfolgen kann. Nach einer bevorzugten Ausführungsform wird das vorverfestigte Spinnvlies nach der Netzmittelbehandlung auch ohne vorherige Trocknung der hydrodynamischen Verfestigung zugeführt. Diese letztgenannte Ausführungsform hat sich besonders bewährt.

Vor der hydrodynamischen Verfestigung wird auf das vorverfestigte Spinnvlies die Faserschicht aus den hydrophilen Fasern aufgebracht. Bei den hydrophilen Fasern handelt es sich um wasseraufnahmefähige Fasern. Als hydrophile Fasern können insbesondere Cellulosefasern, wie beispielsweise Pulpfasern eingesetzt werden. Die Faserschicht aus hydrophilen Fasern bildet gleichsam eine saugfähige Schicht des erfindungsgemäßen Faserlaminates, wobei zumindest ein Teil der hydrophilen Fasern durch die hydrodynamische Verfestigung in die Zwischenräume der zumindest einen Spinnvlieslage gelangen. Nach sehr bevorzugter Ausführungsform der Erfindung werden die hydrophilen Fasern mit Hilfe zumindest einer Karde und/oder mit zumindest Air-laid-Einrichtung auf das vorverfestigte Spinnvlies aufgebracht.

Es liegt im Rahmen der Erfindung, dass auf das Laminat aus dem zumindest einen Spinnvlies und der Faserschicht aus hydrophilen Fasern zumindest ein zweites Spinnvlies aufgebracht wird und zwar zweckmäßigerweise vor der hydrodynamischen Verfestigung. Das zweite Spinnvlies wird dabei zweckmäßigerweise unmittelbar auf die Faserschicht aus hydrophilen Fasern aufgebracht. Somit weist dieses bevorzugte Faserlaminat die Schichtenfolge Spinnvlies-Faserschicht-Spinnvlies auf. Es liegt im Rahmen der Erfindung, dass das zweite Spinnvlies vor dem Aufbringen auf das Laminat ebenso behandelt wird wie das erste Spinnvlies. Zweckmäßigerweise wird das zweite Spinnvlies mit einem Kalander bzw. Heißprägekalander in der erfindungsgemäßen Weise vorverfestigt und bevorzugt anschließend mit zumindest einem Netzmittel behandelt. - Eine Spinnvliesbahn bzw. eine Faserschicht kann im Rahmen der Erfindung einerseits als bereits fertiggestellte Schicht beispielsweise von einer Rolle zugeführt werden. Nach einer anderen Ausführungsform wird das Spinnvlies und/oder die Faserschicht direkt aus einer entsprechenden Herstellungsanlage Inline zugeführt.

Es liegt im Rahmen der Erfindung, dass das Laminat aus Spinnvlies bzw. Spinnvliesen und Faserschicht durch Wasserstrahlbehandlung hydrodynamisch verfestigt wird. Bei einer solchen Wasserstrahlverfestigung bzw. Wasserstrahlvernadelung verfestigen feine, sehr schnelle Wasserstrahlen bzw. Hochdruckwasserstrahlen den Vliesstoff. - Nach sehr bevorzugter Ausführungsform der Erfindung beträgt der Spinnvliesanteil des erfindungsgemäß hergestellten Faserlaminates weniger als 50 Gew.-%.

Der Erfindung liegt die Erkenntnis zugrunde, dass mit dem erfindungsgemäßen Verfahren ein Faserlaminat hergestellt werden kann, das zumindest eine Schicht aus Endlosfasern (Filamenten) und eine weitere Schicht aus kürzeren hydrophilen Fasern aufweist und das sich durch ausgezeichnete Oberflächeneigenschaften auszeichnet und vor allem hervorragend als Wischtuch einsetzbar ist. Es lässt sich im Rahmen des erfindungsgemäßen Verfahrens eine optimale Verbindung bzw. Verschlaufung von Spinnvlies und Faserschicht herstellen, die dazu führt, dass das Faserlaminat auch unter mechanischen Beanspruchungen bzw. abrasiven Beanspruchungen allen Anforderungen genügt. Hervorzuheben ist weiterhin, dass das erfindungsgemäße Faserlaminat relativ einfach und wenig aufwendig hergestellt werden kann. Insoweit zeichnet sich das erfindungsgemäße Verfahren auch durch Kostengünstigkeit aus.

## Patentansprüche

1. Verfahren zur Herstellung eines Faserlaminates, insbesondere eines saugfähigen Wischtuches,
wobei zumindest ein Spinnvlies aus Filamenten mit der Maßgabe vorverfestigt wird, dass das vorverfestigte Spinnvlies eine Höchstzugkraft-Arbeit aufweist, die zumindest 50 % der Höchstzugkraft-Arbeit des Spinnvlieses bei maximaler Verfestigung beträgt,
wobei auf das vorverfestigte Spinnvlies zumindest eine Faserschicht aus hydrophilen Fasern aufgebracht wird,
wobei das Laminat aus Spinnvlies und Faserschicht hydrodynamisch verfestigt wird
und wobei das vorverfestigte Spinnvlies mit zumindest einem Netzmittel behandelt wird.

2. Verfahren nach Anspruch 1, wobei das Spinnvlies mit einem Kalander, insbesondere mit einem Heißprägekalander vorverfestigt wird.

3. Verfahren nach einem der Ansprüche 1 oder 2, wobei die Vorverfestigung des Spinnvlieses mit der Maßgabe durchgeführt wird, dass die maximale mittlere freie Weglänge zwischen zwei Bondingpunkten des Spinnvlieses kleiner als 15 mm ist.

4. Verfahren nach einem der Ansprüche 1 bis 3, wobei das vorverfestigte Spinnvlies mit der Maßgabe deformiert wird, dass die Dicke des vorverfestigten Spinnvlieses zunimmt.

5. Verfahren nach einem der Ansprüche 1 bis 4, wobei zumindest ein Tensid als Netzmittel eingesetzt wird.

6. Verfahren nach einem der Ansprüche 1 bis 5, wobei die hydrophilen Fasern mit Hilfe zumindest einer Karde und/oder mit zumindest einer Air-laid-Einrichtung auf das vorverfestigte Spinnvlies aufgebracht werden.

7. Verfahren nach einem der Ansprüche 1 bis 6, wobei auf das Laminat aus Spinnvlies und Faserschicht ein zweites Spinnvlies aufgebracht wird.

8. Verfahren nach einem der Ansprüche 1 bis 7, wobei das Laminat aus Spinnvlies bzw. Spinnvliesen und Faserschicht durch Wasserstrahlbehandlung hydrodynamisch verfestigt wird.

## Claims

1. Method for producing a fibre laminate, in particular an absorbent wiping cloth,
wherein at least one spunbonded nonwoven consisting of filaments is pre-consolidated with the proviso that the pre-consolidated spunbonded nonwoven has a maximum tensile strength which is at least 50% of the maximum tensile strength of the spunbonded nonwoven when fully consolidated,
wherein at least one fibre layer consisting of hydrophilic fibres is applied to the pre-consolidated spunbonded nonwoven,
wherein the laminate consisting of the spunbonded nonwoven and the fibre layer is hydrodynamically consolidated,
and wherein the pre-consolidated spunbonded nonwoven is treated with at least one wetting agent.

2. Method according to claim 1, wherein the spunbonded nonwoven is pre-consolidated by means of a calender, in particular by means of a hot embossing calender.

3. Method according to one of claims 1 or 2, wherein the pre-consolidation of the spunbonded nonwoven is carried out with the proviso that the maximum mean free path length between two bonding points of the spunbonded nonwoven is less than 15 mm.

4. Method according to one of claims 1 to 3, wherein the pre-consolidated spunbonded nonwoven is deformed with the proviso that the thickness of the pre-consolidated spunbonded nonwoven increases.

5. Method according to one of claims 1 to 4, wherein at least one surfactant is used as the wetting agent.

6. Method according to one of claims 1 to 5, wherein the hydrophilic fibres are applied to the pre-consolidated spunbonded nonwoven by means of at least one carding machine and/or by means of at least one air-laying device.

7. Method according to one of claims 1 to 6, wherein a second spunbonded nonwoven is applied to the laminate consisting of the spunbonded nonwoven and the fibre layer.

8. Method according to one of claims 1 to 7, wherein the laminate consisting of the spunbonded nonwoven or spunbonded nonwovens and the fibre layer is hydrodynamically consolidated by means of a water jet treatment.

## Revendications

1. Procédé de fabrication d'un laminé de fibres, en particulier d'une serpillière absorbante, dans lequel
- au moins un non-tissé de filaments est pré-renforcé de sorte que le non-tissé pré-renforcé présente un travail sous force de traction maximale, qui atteint au moins 50% du travail sous force de traction maximale du non-tissé à l'état de renforcement maximal,
- au moins une couche de fibres en fibres hydrophiles est appliquée sur le non-tissé pré-renforcé,
- le laminé constitué du non-tissé et de la couche de fibres est renforcé par voie hydrodynamique et
- le non-tissé pré-renforcé est traité par au moins un agent mouillant.

2. Procédé suivant la revendication 1, dans lequel le non-tissé est pré-renforcé par une calandre, en particulier une calandre de gaufrage à chaud.

3. Procédé suivant l'une des revendications 1 ou 2, dans lequel lé pré-renforcement du non-tissé s'effectue de sorte que la longueur libre maximale moyenne entre deux points d'assemblage du non-tissé est inférieure à 15 mm.

4. Procédé suivant l'une des revendications 1 à 3, dans lequel le non-tissé pré-renforcé est déformé de sorte que son épaisseur augmente.

5. Procédé suivant l'une des revendications 1 à 4, dans lequel au moins un agent tensioactif est utilisé en tant qu'agent mouillant.

6. Procédé suivant l'une des revendications 1 à 5, dans lequel les fibres hydrophiles sont appliquées à l'aide d'au moins une carde et/ou d'au moins un dispositif air-laid sur le non-tissé pré-renforcé.

7. Procédé suivant l'une des revendications 1 à 6, dans lequel est appliqué un second non-tissé sur le laminé constitué du non-tissé et de la couche de fibres.

8. Procédé suivant l'une des revendications 1 à 7, dans lequel le laminé constitué du non-tissé et/ou des non-tissés et de la couche de fibres est renforcé par voie hydrodynamique par traitement au jet d'eau.
